# EUROPÄISCHE PATENTSCHRIFT

(11) **EP 1 109 859 B1**
(45) Veröffentlichungstag und Bekanntmachung des Hinweises auf die Patenterteilung: **19.05.2004**
(21) Anmeldenummer: 99938238.5
(22) Anmeldetag: 14.07.1999
(51) Int. Cl.: C08L 23/04, C08L 23/08

(54) **GERUCHSARME POLYETHYLEN-BLENDS**
LOW ODOR POLYETHYLENE BLENDS
MELANGES POLYETHYLENIQUES FAIBLEMENT ODORANTS

(30) Priorität: 28.07.1998 DE 19833858
(43) Veröffentlichungstag der Anmeldung: 27.06.2001
(73) Patentinhaber: Basell Polyolefine GmbH, 50389 Wesseling (DE)
(72) Erfinder: ROHDE, Wolfgang, D-67346 Speyer (DE); BAUER, Peter, D-67071 Ludwigshafen (DE); LILGE, Dieter, D-67117 Limburgerhof (DE); LUX, Martin, D-67125 Dannstadt-Schauernheim (DE); DE LANGE, Paulus, D-67117 Limburgerhof (DE); FUNK, Guido, D-67549 Worms (DE)
(74) Vertreter: Meyer, Thomas
(86) Internationale Anmeldenummer: PCT/EP1999/004969
(87) Internationale Veröffentlichungsnummer: WO 2000/006646

(56) Entgegenhaltungen:
- EP-A- 0 533 155
- WO-A-95/01999
- US-A- 4 015 059
- US-A- 4 347 158

## Beschreibung

Vorliegende Erfindung betrifft geruchsarme Polyethylen-Blends enthaltend (a) 30 - 90 Gew. % eines hochmolekularen Ethylencopolymerisates mit einer Schmelzfliessrate MFR 190/21,6 ≤ 1,5 g/10 min, einer Dichte ≤ 0,950 g/ cm³, einem Gewichtsmittel des Molekulargewichtes M_{w} ≥ 300 000 g/mol, einer Breite der Molekulargewichtsverteilung M_{w}/Mₙ von 1 bis 10, und (b) 10 bis 70 Gew.% eines niedermolekularen Ethylenhomopolymerisates oder -copolymerisates mit einer Schmelzfliessrate MFR 190/2,16 von 20 bis 100 g/ 10 min, einer Dichte ≥ 0,95 g/ cm³, einem Gewichtsmittel des Molekulargewichtes M_{w} von 8000 - 80000 g/mol, einer Breite der Molekulargewichtsverteilung M_{w}/Mₙ von 2,5 - 12, erhältlich durch Polymerisation in Gegenwart eines Chromocen-Katalysators auf einem Metalloxid-Träger, wobei der Al-Gehalt der hochmolekularen Komponente 5 bis 60 ppm, der Al-Gehalt der niedermolekularen Komponente 0 bis 5 ppm, und der Al-Gehalt des Blends 1 bis 55 ppm beträgt. Sie betrifft weiterhin ein Verfahren zur Herstellung derartiger Polyethylen-Blends sowie deren Verwendung zur Herstellung von Formkörpern, insbesondere Hohlkörpern und Druckrohren.

An die mechanische Belastbarkeit von Formkörpern aus Polyethylen werden immer höhere Anforderungen gestellt. Insbesondere werden hoch spannungsrissbeständige, schockzähe und steife Produkte gefordert, die sich besonders für die Herstellung von Hohlkörpern sowie Druckrohren eignen. Die Forderung nach gleichzeitig guter Spannungsrissbeständigkeit und Steifigkeit ist nicht leicht zu erfüllen, denn diese Eigenschaften sind gegenläufig. Während die Steifigkeit mit zunehmender Dichte des Polyethylen zunimmt, nimmt die Spannungsrissbeständigkeit mit zunehmender Dichte ab.

Es hat sich daher als vorteilhaft erwiesen, für Hohlkörper und Druckrohre Blends aus einem hochmolekularen, niederdichten Ethylencopolymer und einem niedermolekularen, hochdichten Ethylenhomopolymer einzusetzen, so z.B. beschrieben bei L. L. Böhm et al., Adv. Mater. 4, 234 - 238 (1992). Ähnliche Polyethylen-Blends werden offenbart von EP-A 100 843, EP-A 533 154, EP-A 533 155, EP-A 533 156, EP-A 533 160 und US 5, 380,807.

In zunehmendem Maße finden Druckrohre aus Polyethylen Verwendung zum Transport von Trinkwasser. Neben einer hohen Steifigkeit und einer hohen Zeitstandfestigkeit bei hohen Drücken ist für diese Anwendung von Bedeutung, dass das Polyethylen einen möglichst geringen Geruch aufweist und möglichst geschmacksneutral ist. Das Geruchsniveau eines Werkstoffes kann mit verschiedenen Methoden bestimmt werden. Ein notwendiges aber nicht hinreichendes Kriterium für ein gutes Geruchsniveau ist ein möglichst geringer Anteil von flüchtigen Kohlenstoffverbindungen im Werkstoff. So wird mittels des sogenannten "VW-Audi-Tests" (Prüfvorschrift 3341, Verband Deutscher Automobilbauer, Norm-Empfehlung Nr. 277) der bei 120°C flüchtige Kohlenstoff-Anteil eines Werkstoffes bestimmt. Zusätzlich ist aber eine Geruchsbeurteilung unerlässlich. Nach der DIN 10955 und 10951 A1 bzw. EN 1622 beurteilen mehrere Testpersonen den Geruch eines Werkstoffes auf einer Skala von 0 bis 4. Die sogenannte "electronic nose" erfasst flüchtige Bestandteile des Werkstoffes mittels verschiedener Leitfähigkeitsmessungen.

In "Polymeric Materials Encyclopedia, Edt. J. P. Salamone, CRC Press, New York 1996, Seite 5997/98 " werden mögliche Ursachen für Geruch von Polyethylen aufgeführt. Im allgemeinen wird der Geruch von Polyethylen durch Oxidation des Polymers oder durch Katalysatorreste, z.B. das als Cokatalysator bei Ziegler-Katalysatoren verwendete Triethylaluminium hervorgerufen. Eine weitere mögliche Ursache sind Additive wie z.B. Ca- oder Zn-Stearat, vor allem deren Zersetzungsprodukte. Diese Additive werden z.B. eingesetzt, um aus Ziegler-Katalysatoren stammendes HCl zu binden. Es ist daher häufig notwendig, für Trinkwasseranwendungen dem Polyethylen zusätzlich geruchsbindende Zusatzstoffe zuzusetzen oder zusätzliche Verfahrensschritte wie z.B. Desoderierung durch Belüften durchzuführen.

Ein besonderes Problem bei der Herstellung geruchsarmer Polyethylen-Blends stellt die niedermolekulare Komponente dar, deren Molekulargewicht möglichst niedrig sein sollte, um eine ausreichend hohe Dichte/Steifigkeit des Blends zu gewährleisten. Ist die Molekulargewichtsverteilung der niedermolekularen Komponente aber breit, so besteht die Gefahr, dass das Blend zu viele Oligomere enthält, die Geruch hervorrufen könnten. So offenbart US 5,350,807 Polyethylen mit einen Polymerisationsgrad von nur 9 bis 125 als bevorzugten Bereich für den niedermolekularen Anteil. Ausserdem leidet die Schockzähigkeit des Blends unter zu hohem Oligomer-Anteil. Die Molekulargewichtsverteilung der niedermolekularen Komponente sollte also möglichst eng sein.

Enge Molekulargewichtsverteilungen lassen sich bevorzugt mit den klassischen Ziegler- und Metallocen-Katalysatoren erreichen. Diese benötigen aber grosse Mengen an freien Al-organischen Cokatalysatoren, die sich negativ auf den Geruch des Polyethylens auswirken. Die freien Cokatalysatoren können weiterhin nach der von Ziegler beschriebenen sog. Aufbaureaktion Ethylenoligomere bilden, die den Anteil flüchtiger Verbindungen im Polymeren erhöhen. Ausserdem haben Ziegler-Katalysatoren bei der Herstellung niedermolekularen Polyethylens nur eine geringe Produktivität, so dass viel Katalysator und damit auch viel Cokatalysator benötigt wird. Phillips-Katalysatoren liefern nur breite Molekulargewichtsverteilungen und benötigen zum Erreichen niedriger Molekulargewichte ebenfalls grosse Mengen an Cokatalysatoren. Das Problem der Herstellung geruchsarmer, niedermolekularer Polyethylen-Komponenten für Ethylenpolymer-Blends mit Katalysatoren hoher Produktivität ist bislang ungelöst.

Keine der oben genannten Offenbarungen umfasst Ethylenpolymer-Blends, die neben guten mechanischen Eigenschaften auch ein niedriges Geruchsniveau und geringen Eigengeschmack aufweisen. Aufgabe der vorliegenden Erfindung war es daher, derartig verbesserte Blends zur Verfügung zu stellen.

Demgemäss wurden die eingangs definierten Blends gefunden. Weiterhin wurde ein Verfahren zur Herstellung derartiger Blends gefunden sowie deren Verwendung für Hohlkörper und Rohre.

Das Polyethylen-Blend der vorliegenden Erfindung enthält zwei Komponenten.

Die niedermolekulare Komponente (a) besteht aus einem Ethylenhomopolymerisat oder -copolymerisat mit einem Gewichtsmittel des Molekulargewichtes von 8000 bis 80000 g/mol, bevorzugt 20000 bis 70000 g/mol und ganz bevorzugt 30000 bis 60000 g/mol. Die Breite der Molekulargewichtsverteilung M_{w}/Mₙ beträgt 2,5 bis 12, bevorzugt 3 bis 10 und ganz besonders bevorzugt 5 bis 8. Die Schmelzflussrate MFR 190/2,16 des Ethylenhomopolymerisat oder - copolymerisates beträgt 15 bis 100 g/10 min, bevorzugt 20 bis 60 g/10 min und besonders bevorzugt 25 bis 40 g/10 min. Die Dichte beträgt mindestens 0,95 g/cm³, bevorzugt 0,95 - 0,97 g/cm³, ganz besonders bevorzugt 0,96 bis 0,97 g/cm³.

Die niedermolekulare Komponente kann zusätzlich Comonomere neben dem Ethylen enthalten. Das Comonomer wird entsprechend den gewünschten Eigenschaften ausgewählt. Bevorzugt werden jedoch 1-Olefine als Comonomere eingesetzt, ganz besonders bevorzugt Propen, 1-Buten, 1- Penten, 1-Hexen, 1-Octen oder 4-Methylpenten. Die Menge des eingesetzten Comonomers wird ebenfalls entsprechend den gewünschten Eigenschaften gewählt, bevorzugt beträgt die Menge aber nicht mehr als 1 mol% bzgl. der Menge aller eingesetzten Monomere.

Die niedermolekulare Polyethylen-Komponente der vorliegenden Erfindung weist nur geringe Anteile von flüchtigen Kohlenstoff-Verbindungen auf. Der Anteil flüchtigen Kohlenstoffes, gemessen bei 120°C mittels des oben zitierten "VW-Audi Testes" beträgt maximal 80 mg/kg, bevorzugt nicht mehr als 70 mg/kg.

Bevorzugt enthält die niedermolekulare Komponente kein Aluminium. Die vorliegende Erfindung umfasst aber auch solche Komponenten, die Spuren von Al enthalten. Derartige Spuren können bspw. durch die Herstellung, den Transport oder die Lagerung in Al-haltigen Gefässen verursacht sein. Der Al-Gehalt der niedermolekularen Komponente ist aber keinesfalls grösser als 5 mg/kg bzgl. Polyethylen.

Die hochmolekulare Komponente (b) besteht aus einem Ethylencopolymerisat mit einem Gewichtsmittel des Molekulargewichtes ≥ 300 000 g/mol, bevorzugt 350000 bis 700000 g/mol und ganz besonders bevorzugt 400000 bis 600000 g/mol. Das neben dem Ethylen eingesetzte Comonomer wird entsprechend den gewünschten Eigenschaften ausgewählt. Bevorzugt werden jedoch 1-Olefine als Comonomere eingesetzt, ganz besonders bevorzugt Propen, 1-Buten, 1- Penten, 1-Hexen, 1-Octen oder 4-Methylpenten. Die Menge des eingesetzten Comonomers wird ebenfalls entsprechend den gewünschten Eigenschaften gewählt, bevorzugt wird jedoch eine Menge von 0,2 bis 4,0 mol% bzgl. der Menge aller eingesetzten Monomere.

Die Breite der Molekulargewichtsverteilung M_{w}/Mₙ beträgt 1 bis 10, bevorzugt 3 bis 9 und ganz besonders bevorzugt 5 bis 9. Die Schmelzfliessrate MFR 190/21,6 des Ethylencopolymerisates ist nicht grösser als 1,5 g/10 min, bevorzugt 0,5 bis 1,5 g/10 min und besonders bevorzugt 0,6 bis 1,2 g/10 min. Ist die Schmelzfliessrate MFR 190/21,6 grösser als 1,5 g/10 min, so werden die mechanischen Eigenschaften des Blends beeinträchtigt. Die Dichte ist nicht grösser als 0,950 g/cm³, bevorzugt 0,91 - 0,945 g/cm³, besonders bevorzugt 0,92 bis 0,94 g/cm³.

Die hochmolekularen Polyethylen-Komponenten der vorliegenden Erfindung weisen nur geringe Anteile von flüchtigen Kohlenstoff-Verbindungen auf. Der Anteil flüchtigen Kohlenstoffes, gemessen bei 120°C mittels des oben zitierten "VW-Audi Testes" beträgt weniger als 80 mg/kg, bevorzugt weniger als 40 mg/kg.

Die hochmolekulare Polyethylen-Komponente der vorliegenden Erfindung enthält 5 bis 60 mg/kg Al bzgl. Polyethylen und besonders bevorzugt 20 bis 50 mg/kg.

Die erfindungsgemässen Blends enthalten 30 bis 90 Gew. % der hochmolekularen Komponente und 10 bis 70 Gew.% der niedermolekularen Komponente. Bevorzugt enthalten sie 40 bis 80 Gew. % der hochmolekularen und 20 bis 60 Gew. % der niedermolekularen Komponente, ganz besonders bevorzugt 40 bis 60 Gew. % der hochmolekularen und 60 bis 40 Gew. % der niedermolekularen Komponente.

Die erfindungsgemässen Blends enthalten nicht mehr als 55 mg/kg Al. Ist der Al-Gehalt grösser, so werden keine geruchsarmen Polyethylen-Blends mehr erhalten. Bevorzugt beträgt der Al-Gehalt 1,5 bis 55 mg/kg und ganz besonders bevorzugt 5 bis 30 mg/kg.

Die erfindungsgemässen Blends zeichnen sich weiterhin durch einen geringen Geruch aus. Die nach DIN 10955 und 10951 A1 bzw. EN 1622 bestimmte Geruchsnote ist kleiner als 3. Der Anteil flüchtigen Kohlenstoffes, gemessen bei 120°C mittels des oben zitierten "VW-Audi Testes" beträgt maximal 80 mg/kg, bevorzugt nicht mehr als 60 mg/kg, ganz besonders bevorzugt nicht mehr als 30 mg/kg.

Die erfindungsgemässen Blends können in an sich bekannter Art und Weise aus der hoch- und der niedermolekularen Komponente durch inniges Vermischen und Homogenisieren bei erhöhten Temperaturen, z.B. in Einzel- oder Doppelschneckenextrudern oder Knetern hergestellt werden. Während des Misch- und Homogenisierungsvorganges wird die Temperaturbelastung des Polymeren so gering wie möglich gehalten, so dass so wenig wie möglich zusätzliche Anteile flüchtigen Kohlenstoffes durch Zersetzung erzeugt werden. Die Temperatur wird daher so niedrig wie möglich und die Mischzeit so kurz wie möglich gehalten. Bevorzugt liegt die Temperatur bei 180 bis 270°C. Während des Misch- und Homogenisierungsvorganges können auch noch weitere Komponenten, wie z.B. an sich bekannte Antioxidantien, UV-Stabilisatoren, Farbstoffe, Farbpigmente oder Prozesshilfsmittel zugegeben werden. Die Menge der Zusätze wird so eingestellt, dass der Anteil flüchtigen Kohlenstoffes im Blend 80 mg/kg nicht überschreitet, und dass eine Geruchsnote kleiner 3 erhalten wird.

Die Herstellung der geschilderten, hochmolekularen Ethylencopolymerisate mit niedrigen Anteilen flüchtigen Kohlenstoffs erfolgt mittels an sich bekannter Ziegler-Katalysatoren. Besonders bevorzugt sind Titankatalysatoren. Derartige Katalysatoren sowie die Verfahren, um derartige Polymere herzustellen, sind z.B. beschrieben in DE-A 34 33 468, DE-A 42 17 171, EP-A 518093 ohne dass diese Auswahl eine Einschränkung der Erfindung bedeuteten soll. Die Menge an Cokatalysatoren wird so beschränkt, dass der Anteil flüchtigen Kohlenstoffes 80 mg/kg nicht überschreitet, und dass der Al-Gehalt nicht mehr als 60 mg/kg beträgt. Die Polymerisation wird üblicherweise in Suspension, z.B. in einem Schleifenreaktor, oder in der Gasphase, z.B. in einem Wirbelschichtreaktor durchgeführt.

Die Herstellung der geschilderten, niedermolekularen Ethylenhomooder -copolymerisate mit niedrigen Anteilen flüchtigen Kohlenstoffes erfolgt mittels eines Chromocen-Katalysators auf einem oxidischen Träger. Chromocen-Katalysatoren zur Herstellung von Polyolefinen sind prinzipiell bekannt, so z.B. aus DE-A 43 23 192 oder US 4,424,139 Besonders geeignet im Sinne dieser Erfindung ist das Bis(cyclopentadienyl) chrom II.

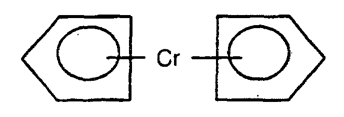

Die Erfindung umfasst aber auch Derivate des Chromocens, in denen die Cyclopentadienylgruppen inerte organische Substituenten tragen. Als Substituenten kommen in Frage z.B. Alkylgruppen wie C₁ bis C₆-Alkylgruppen und/oder C₆ bis C₁₂-Arylgruppen. Weiterhin kommen in Frage annelierte Cyclopentadienylgruppen wie Inden oder Fluoren, die ebenfalls mit den genannten Resten substituiert sein können.

Als Trägermaterialien sind Metalloxide geeignet, wie z.B. die Oxide des Siliciums oder des Zirkoniums, wobei Siliciumdioxid bevorzugt ist. Die Herstellung derartiger Träger ist z.B. in der DE-A 36 34 534 beschrieben. Diese Träger weisen vorzugsweise eine hohe innere Oberfläche von ca. 50 bis 1000 m²/g. Der mittlere Porendurchmesser liegt im Bereich von 1 bis 100 nm. Ein besonders bevorzugtes handelsübliches Produkt ist z.B. das Silicia Gel 332 der Fa. Grace. Im Gegensatz dazu führt z.B. die Verwendung des von der US 4,424,139 offenbarten Chromocens-Katalysators auf einem AlPO₄-Träger zu niedermolekularen Komponenten, die einen deutlichen Geruch und hohe Anteile flüchtigen Kohlenstoffs aufweisen. Ausserdem ist die Produktivität derartig geträgerter Chromocen-Katalysatoren niedriger.

Vor der Beladung mit dem Chromocen werden die Trägermaterialien üblicherweise in einer Inertgasatmosphäre bei 200 - 900°C ausgeheizt, um adsorbiertes Wasser zu entfernen.

Die Beladung des getrockneten Trägermaterials erfolgt vorzugsweise so, dass man das Chromocen in einem Lösungsmittel löst und die Lösung mehrere Stunden lang auf das Trägermaterial einwirken lässt. Geeignete Lösungsmittel sind Kohlenwasserstoffe wie n-Pentan, n-Hexan, Cyclohexan oder Toluol. Die Lösungsmittelmenge wird so gewählt, dass das Trägermaterial vollständig benetzt wird. Anschliessend werden die Feststoffe vom Lösungsmittel abgetrennt, z.B. durch Filtration, und der Feststoff wird getrocknet.

Die Menge an Chrom im Trägerkatalysator beträgt in der Regel 0,1 - 10 Gew.%, bezogen auf das Trägermaterial.

Die Polymerisation wird im allgemeinen in Suspension, z.B. in einem Schleifenreaktor oder in der Gasphase, z.B. in einem Wirbelschichtreaktor in an sich bekannter Art und Weise durchgeführt, so wie z.B. in "Ullmanns Enzyklopädie der technischen Chemie, Band 19, 4. Auflage beschrieben.

Zusätzlich zu Chromocen können auch Cokatalysatoren eingesetzt werden. Als Cokatalysatoren ausgeschlossen sind Aluminium- und Bor-Verbindungen. Falls erforderlich können aber Hydride oder Organometallverbindungen von Alkali- oder Erdalkalimetallen als Cokatalysatoren zugegeben werden. Neben Lithium als Metall kommen Natrium, Kalium, Beryllium, Magnesium, Calcium oder Barium in Betracht. Bei den Organometallverbindungen sind Metallalkyle und Metallaryle bevorzugt. Als Kohlenwasserstoffreste kommen aliphatische Reste mit 1 bis 6 Kohlenstoffatomen sowie aromatische Reste mit 6 bis 15 Kohlenstoffatomen in Betracht. Bevorzugt sind hier die Lithiumverbindungen, z.B. n-Butyllithium oder Phenyllithium. Die Menge kann entsprechend den Erfordernissen gewählt werden, wird aber so beschränkt, dass der Anteil flüchtigen Kohlenstoffes in der hergestellten niedermolekularen Komponente 80 mg/kg nicht überschreitet.

Die erfindungsgemässen Polyethylen-Blends zeichnen sich durch einen geringen Geruch und geringen Eigengeschmack aus. Sie verfügen weiterhin über eine hohe Spannungsrissbeständigkeit und eine hohe Schockzähigkeit. Sie eignen sich daher in hervorragender Art und Weise zur Herstellung von Folien und Formkörpern, insbesondere von Druckrohren zum Transport von Trinkwasser, sowie für Hohlkörper zur Lagerung und zum Transport von Getränken und Lebensmitteln.

Die folgenden Versuchsbeispiele dienen zur weiteren Erläuterung der Erfindung, ohne dass dadurch der Umfang der Erfindung eingeschränkt werden soll.

Die beschriebenen Messwerte wurden in folgender Art und Weise ermittelt:

| | |
|---|---|
| Dichte | nach ISO 1183 |
| Schmelzflussindex MFR 190/21,6 oder MFR 190/2,16 | nach ISO 1133 |
| Gewichtsmittel des Molekulargewichtes M_{w}, | in Anlehnung an DIN 55672 mit Polyethylen-Standards |
| Molekulargewichtsverteilung M_{w}/Mₙ | |
| | |
| Spannungsrissbeständigkeit ESCR | Scheibenförmige Prüfkörper (Durchmesser 40 mm, 2 mm dick, einseitig geritzt mit einer Kerbe von 20 mm Länge und 0,1 mm Tiefe) werden bei 80°C in eine 1 % Nekanil-Lösung eingetaucht und mit einem Druck von 3 bar belastet. Gemessen wird die Zeit bis zum Auftreten von Spannungsrissen. |
| flüchtiger Kohlenstoff: | gemessen mittels des "VW-Audi-Tests", Prüfvorschrift 3341, Verband Deutscher Automobilbauer, Norm-Empfehlung Nr. 277 |
| Geruchsnote | in Anlehnung an DIN 10955 und 10951 A1 bzw. EN 1622 |
| | |
| | Probenvorbereitung: |
| | Für jede Prüfung durch eine Prüfperson werden 30g Produkt in eine 11-Weithalsglasflasche bei 40°C 2 h ausgeheizt. |
| | |
| | Prüfung |
| | Für jedes Produkt werden mind. 7 Prüfpersonen herangezogen. Die Bewertung nach Noten erfolgt: |
| | |
| | 0 kein wahrnehmbarer Geruch Geruch |
| | 1 kaum wahrnehmbarer |
| | 2 schwacher Geruch |
| | 3 deutlicher Geruch |
| | 4 starker Geruch |
| | |
| | Abstufungen um halbe Noten werden zugelassen, für jedes Produkt wird die Geruchsnote als Mittelwert über alle Prüfer gebildet. |
| Geruchsbeurteilung mittels elektronischer Nase | Gerät: |
| | Electronic Nose FOX 3000 der Fa. Alpha M.O.S. (Toulouse) |
| | |
| | Proben werden 1 h bei 120°C in einem geschlossenen Gefäss ausgeheizt, anschließend wird aus dem Gasraum über der Probe ein Gasvolumen von 2,5 ml entnommen und in die Messapparatur injeziert. Die Bestandteile des Gases bewirken bei 16 unterschiedlichen Sensoren Leitfähigkeitsänderungen, die über die Zeit gemessen werden. Eine hohe Gesamtleitfähigkeit kann mit einem erhöhten Geruch korreliert werden. |
| | |
| | Angegeben wird die Gesamtleitfähigkeit (in relativen Einheiten bzgl. des Gerätenullpunktes) gemessen 40 s nach der Injektion |

### Herstellung der hochmolekularen Komponente:

### Beispiel 1 (erfindungsgemäss):

Das hochmolekulare Ethylencopolymer wurde in einem 180 1 Schleifenreaktor mittels eines Ziegler-Katalysators (kommerzieller Katalysator Sylopol 5950, Grace) hergestellt. Im Reaktor wurde ein Druck von 41 bar aufrecht erhalten. Als Cokatalysator diente Triisobutylaluminium, welches in einer Konzentration von 250 ppm bezogen auf das Polyethylen eingesetzt wurde. Als Comonomer diente 1-Hexen. Die Reaktorinnentemperatur lag bei 95°C. Verfahrens- und Produktdaten siehe Tabelle 1.

### Herstellung der niedermolekularen Komponente:

### Beispiel 2 (erfindungsgemäss):

Das niedermolekulare Ethylenhomopolymer wurde in einem 180 l Schleifenreaktor nach DE-A 43 23 192, Beispiel Nr.1 mittels eines Chromocenkatalysators durchgeführt. Als Träger wurde reines, bei 800°C calziniertes Kieselgel verwendet. Als Cokatalysator wurde n-Butyllithium in einer Konzentration von 8 ppm bezogen auf das Polymere eingesetzt. Die Reaktorinnentemperatur lag bei 95°C. Verfahrens- und Produktdaten siehe Tabelle 1.

### Beispiel 3 (zum Vergleich):

Das niedermolekulare Ethylenhomopolymer wurde in einem 180 l Schlaufenreaktor mittels eines Ziegler-Katalysators (Sylopol 5950, Grace) hergestellt. Als Cokatalysator diente Triisobutylaluminium, welches in einer Konzentration von 185 ppm bezogen auf das Polyethylen eingesetzt wurde. Als Comonomer diente 1-Hexen. Die Reaktorinnentemperatur lag bei 100°C. Verfahrens- und Produktdaten siehe Tabelle 1.

### Beispiel 4 (erfindungsgemäss):

Kieselgel (SG 332, Fa. Grace-Davison) wurde im Wirbelbettreaktor 6h unter Argon bei 800°C calciniert. Nach Abkühlen wurden 15,6 g des calcinierten Kieselgels in 150 ml Heptan unter Ar suspendiert, 1,11 g Chromocen zugegeben (entsprechend 2 Gew.% Cr) und 2 h bei Raumtemperatur gerührt. Anschliessend wurde der Feststoff abfiltriert, mit Heptan gewaschen und im Vakuum bei Raumtemperatur getrocknet.

Die Polymerisation wurde mit 177 mg des Katalysators in einem 1 l Autoklaven durchgeführt. Als Suspensionsmittel wurde 0,5 l Isobutan eingesetzt, welches zusammen mit 0,2 Vol% Wasserstoff und 20 mg BuLi vorgelegt wurde. Der Versuch wurde bei 80°C und 26 bar Gesamtdruck ausgeführt. Nach 90 min wurde der Versuch durch Entspannen des Reaktors beendet. Tabelle 2 zeigt die Ergebnisse.

### Beispiel 5 (Vergleichsbeispiel nach US 4, 424, 139, Beispiel 3)

468,9 g Al(NO₃)₃*9 H₂O und 115,0 g (NH₄)H₂PO₄ (P/Al=0,8) wurden unter Inertgas auf 80 - 90°C erhitzt und die entstandene Schmelze innig gerührt. Nach 1 h wurde durch Zugabe von 35% iger Ammoniaklösung der pH-Wert auf 6 -7 eingestellt. Nach Abfiltrieren und Waschen wurde bis zur Gewichtskonstanz getrocknet.

Das erhaltene AlPO₄ wurde im Wirbelbett-Reaktor 6h unter Argon bei 600°C calciniert.

Nach Abkühlen wurden 11,3 g des calcinierten AlPO₄ in 150 ml Heptan unter Ar suspendiert, 0,86 g Chromocen zugegeben (entsprechend 2 Gew.% Cr) und 2 h bei Raumtemperatur gerührt. Anschliessend wurde der Feststoff abfiltriert, mit Heptan gewaschen und im Vakuum bei Raumtemperatur getrocknet.

Die Polymerisation wurde mit 198 mg des Katalysators in einem 1 1 Autoklaven durchgeführt. Als Suspensionsmittel wurde 0,5 1 Isobutan eingesetzt, welches zusammen mit 0,6 Vol% Wasserstoff und 37,2 mg Triethylboran ( B/Cr = 5) vorgelegt wurde. Der Versuch wurde bei 96°C und 40 bar Gesamtdruck ausgeführt. Nach 90 min wurde der Versuch durch Entspannen des Reaktors beendet. Tabelle 2 zeigt die Ergebnisse.

### Herstellung des Blends:

### Beispiele 6-7:

Zur Herstellung der Blends wurde ein Zweischneckenextruder ZSK 25 der Fa. Werner & Pfleiderer eingesetzt. Die Extrusion erfolgte bei 210°C bei einer Drehzahl von 300 Upm und einem Durchsatz von 13 kg/h. Die Blends wurden jeweils mit 1000 ppm Irganox® 1076 und 2000 ppm Irganox® B 215 (Fa. Ciba-Geigy) stabilisiert. Tabelle 3 fasst die Ergebnisse zusammen.

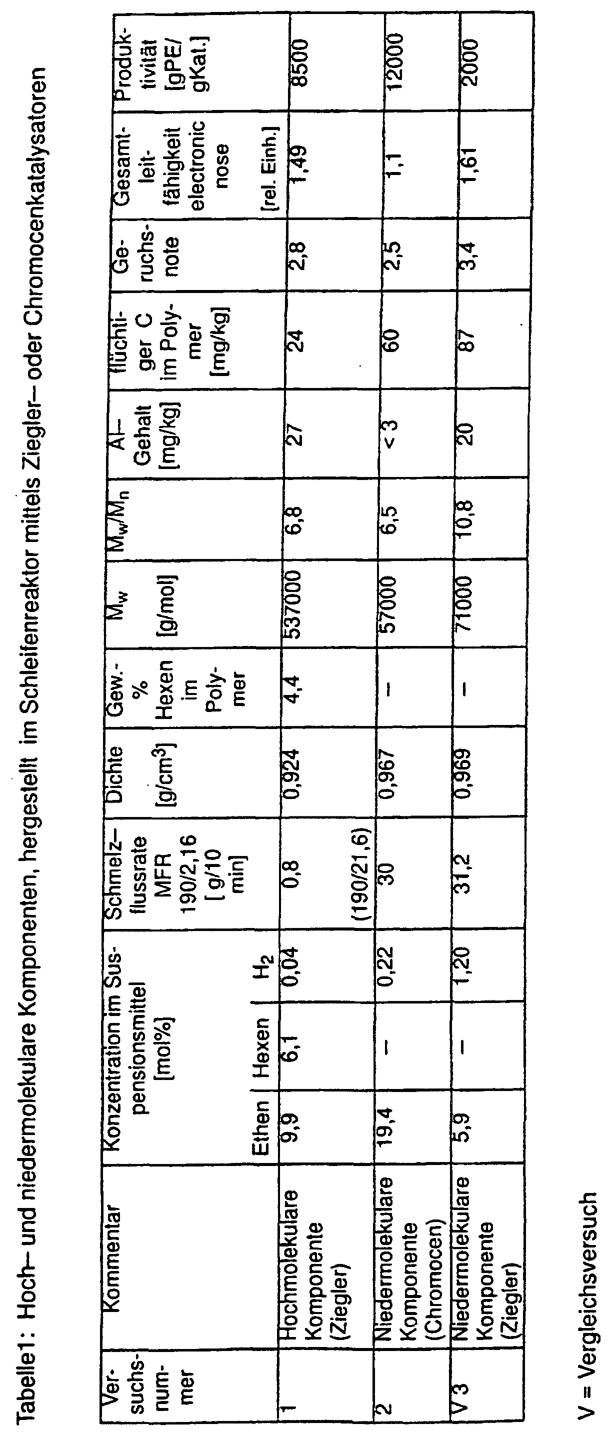

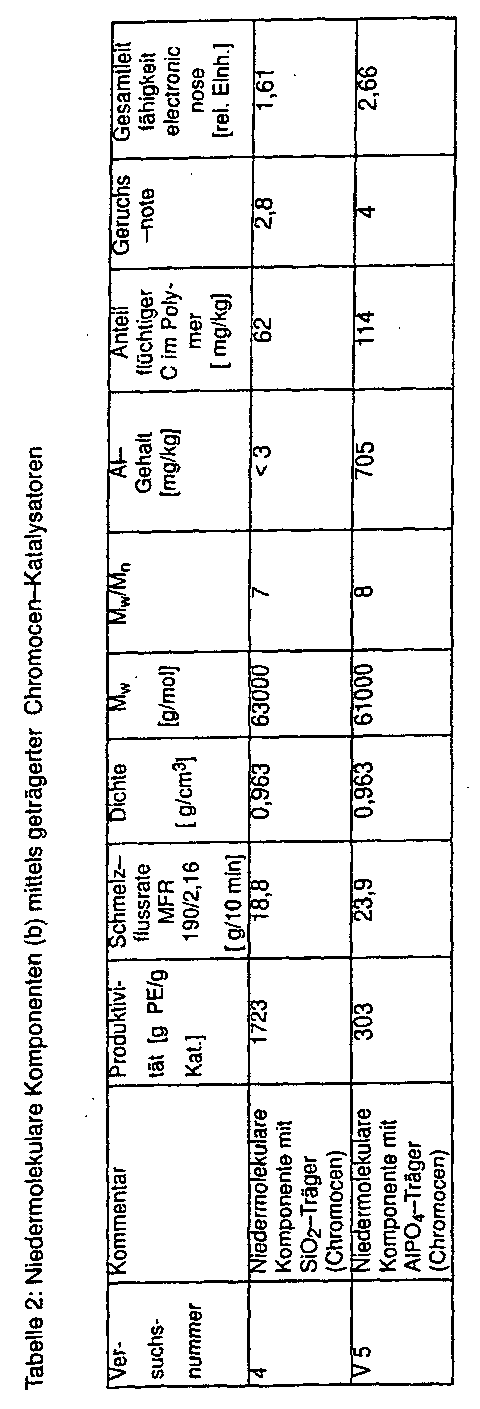

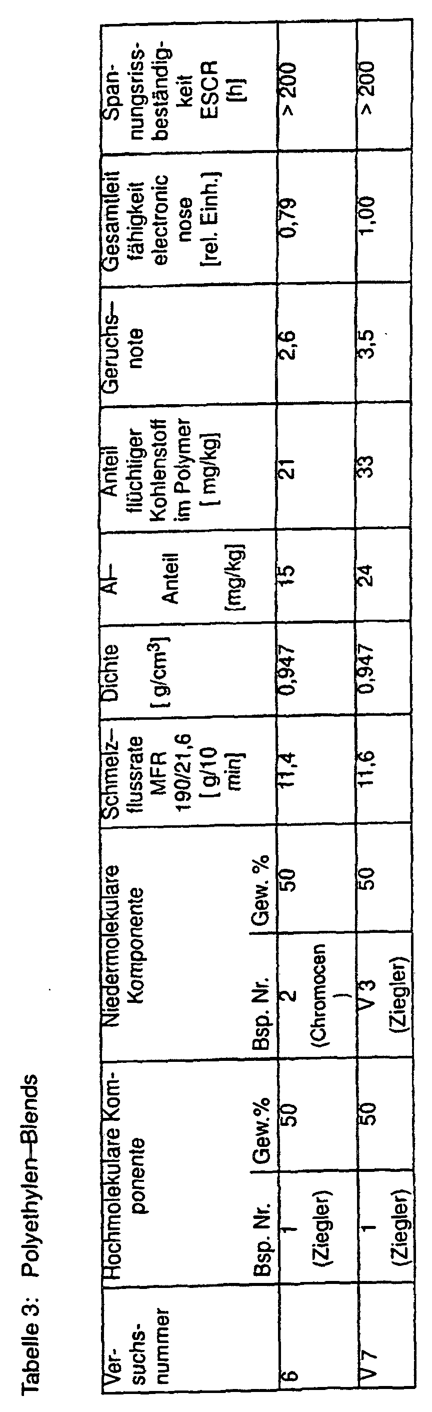

Die Beispiele zeigen, dass die erfindungsgemässen Blends sich gegenüber Blends gemäss dem Stand der Technik durch hervorragende Geruchseigenschaften auszeichnen.

Erfindungsgemäss hergestellte niedermolekulare Komponenten weisen deutlich niedrigere Anteile flüchtigen Kohlenstoffs, eine bessere Geruchsnote und eine geringere Gesamtleitfähigkeit, gemessen mit der "electronic nose" als solche mit Zieglerkatalysatoren hergestellten auf. Tabelle 2 zeigt die Vorteile oxidischer Träger gegenüber AlPO₄-Trägern. Oxidische Träger führen zu besseren Geruchseigenschaften und weisen ausserdem eine erheblich höhere Produktivität auf. Tabelle 3 zeigt, dass mit den erfindungsgemässen niedermolekularen Komponenten bei gleicher hochmolekularer Komponente hergestellte Blends niedrigere Anteile flüchtigen Kohlenstoffs, eine bessere Geruchsnote und eine geringere Gesamtleitfähigkeit, gemessen mit der "electronic nose" aufweisen. Sie sind daher besser für Lebensmittelanwendungen geeignet.

## Patentansprüche

1. Geruchsarmes Polyethylen-Blend enthaltend
(a) 30 - 90 Gew.-% eines hochmolekularen Ethylencopolymerisates mit einer Schmelzfliessrate MFR 190/21,6 ≤ 1,5 g/10 min, einer Dichte ≤ 0,950 g/cm³, einem Gewichtsmittel des Molekulargewichtes M_{w} ≥ 300 000 g/mol, einer Breite der Molekulargewichtsverteilung M_{w}/Mₙ von 1 - 10, erhältlich durch Polymerisation in Gegenwart eines Ziegler-Katalysators
und
(b) 10 - 70 Gew.-% eines niedermolekularen Ethylenhomopolymerisates oder -copolymerisates mit einer Schmelzfliessrate MFR 190/2,16 von 20 - 100 g/10 min, einer Dichte ≥ 0,95 g/cm³, einem Gewichtsmittel des Molekulargewichtes M_{w} von 8000-80000 g/mol, einer Breite der Molekulargewichtsverteilung M_{w}/Mₙ von 2,5 - 12, erhältlich durch Polymerisation in Gegenwart eines Chromocen-Katalysators auf einem Metalloxid-Träger,
wobei der Al-Gehalt der hochmolekularen Komponente 5 bis 60 ppm, der Al-Gehalt der niedermolekularen Komponente 0 bis 5 ppm, und der Al-Gehalt des Blends 1 bis 55 ppm beträgt.

2. Geruchsarmes Polyethylen-Blend gemäss Anspruch 1, **dadurch gekennzeichnet, dass** das hochmolekulare Ethylencopolymerisat einen Comonomer-Anteil von 0,2 - 4,0 mol.-% und das niedermolekulare Ethylenhomo- bzw. -copolymerisat einen Comonomer-Anteil von 0 - 1 mol.-% jeweils bzgl. der Gesamtmenge aller eingesetzten Monomere enthält.

3. Geruchsarmes Polyethylen-Blend gemäss Anspruch 2, **dadurch gekennzeichnet, dass** das Comonomer mindestens eines ausgewählt aus der Gruppe von Propen, 1-Buten, 1-Penten, 1-Hexen, 1-Octen, 4-Methylpenten ist.

4. Geruchsarmes Polyethylen-Blend gemäß den Ansprüchen 1 bis 3 **dadurch gekennzeichnet, daß** man das hochmolekulare Ethylencopolymerisat (a) durch Polymerisation mit einem Ziegler-Katalysator in Suspension oder in der Gasphase herstellt.

5. Geruchsarmes Polyethylen-Blend gemäß Anspruch 1, **dadurch gekennzeichnet, daß** man das niedermolekulare Ethylenhomopolymerisat oder -copolymerisat (b) durch Polymerisation mit einem Chromocen-Katalysator oder einem substituierten Chromocen-Katalysator auf einem Metalloxid-Träger in Suspension oder in der Gasphase durchführt.

6. Geruchsarmes Polyethylen-Blend gemäß Anspruch 5, **dadurch gekennzeichnet, dass** es sich bei dem Metalloxid um Kieselgel handelt.

7. Verfahren zur Herstellung eines geruchsarmen Polyethylen-Blends gemäss den Ansprüchen 1 bis 3, **dadurch gekennzeichnet, dass** man ein hochmolekulares Ethylencopolymerisat (a), hergestellt durch Polymerisation mit einem Ziegler-Katalysator in Suspension oder in der Gasphase und ein niedermolekulares Ethylenhomopolymerisat oder -copolymerisat (b), hergestellt durch Polymerisation mit einem Chromocen-Katalysator oder einem substituierten Chromocen-Katalysator auf einem Metalloxid-Träger in Suspension oder in der Gasphase, miteinander vermischt und homogenisiert.

8. Verwendung der geruchsarmen Polyethylen-Blends gemäss den Ansprüchen 1 bis 3 zur Herstellung von Folien, Formkörpern, insbesondere Hohlkörpern und Druckrohren.

9. Folien und Formkörper, insbesondere Hohlkörper und Druckrohre, hergestellt aus geruchsarmem Polyethylen gemäss den Ansprüchen 1 bis 3.

## Claims

1. A low-odor polyethylene blend comprising
(a) from 30 to 90% by weight of a high-molecular-weight ethylene copolymer with a melt flow rate MFR 190/21.6 ≤ 1.5 g/10 min, a density ≤ 0.950 g/cm³, a weight-average molecular weight M_{w} ≥ 300,000 g/mol and a polydispersity M_{w}/Mₙ of from 1 to 10, obtainable by polymerization in the presence of a Ziegler catalyst
and
(b) from 10 to 70% by weight of a low-molecular-weight ethylene homopolymer or ethylene copolymer with a melt flow rate MFR 190/2.16 of from 20 to 100 g/10 min, a density ≥ 0.95 g/cm³, a weight-average molecular weight M_{w} of from 8000 to 80,000 g/mol and a polydispersity M_{w}/Mₙ of from 2.5 to 12, obtainable by polymerization in the presence of a chromocene catalyst on a metal oxide support,
where the Al content of the high-molecular-weight component is from 5 to 60 ppm, the Al content of the low-molecular-weight component is from 0 to 5 ppm and the Al content of the blend is from 1 to 55 ppm.

2. A low-odor polyethylene blend as claimed in claim 1, wherein the high-molecular-weight ethylene copolymer comprises a comonomer proportion of from 0.2 to 4.0 mol% and the low-molecular-weight ethylene homopolymer or ethylene copolymer has a comonomer proportion of from 0 to 1 mol%, based in each case on the total amount of all of the monomers used.

3. A low-odor polyethylene blend as claimed in claim 2, wherein the comonomer is at least one comonomer selected from the group consisting of propene, 1-butene, 1-pentene, 1-hexene, 1-octene and 4-methylpentene.

4. A low-odor polyethylene blend as claimed in any of claims 1 to 3, wherein the high-molecular-weight ethylene copolymer (a) is prepared by polymerization with a Ziegler catalyst in suspension or in the gas phase.

5. A low-odor polyethylene blend as claimed in claim 1, wherein the low-molecular-weight ethylene homopolymer or ethylene copolymer (b) is prepared by polymerization with a chromocene catalyst or with a substituted chromocene catalyst on a metal oxide support in suspension or in the gas phase.

6. A low-odor polyethylene blend as claimed in claim 5, wherein the metal oxide is silica gel.

7. A process for preparing a low-odor polyethylene blend as claimed in any of claims 1 to 3, which comprises mixing with one another, and homogenizing, a high-molecular-weight ethylene copolymer (a), prepared by polymerization with a Ziegler catalyst in suspension or in the gas phase, and a low-molecular-weight ethylene homopolymer or ethylene copolymer (b), prepared by polymerization with a chromocene catalyst or with a substituted chromocene catalyst on a metal oxide support in suspension or in the gas phase.

8. The use of the low-odor polyethylene blend as claimed in any of claims 1 to 3 for producing films or moldings, in particular hollow articles or pressure pipes.

9. A film or a molding, in particular a hollow article or a pressure pipe, produced from low-odor polyethylene as claimed in any of claims 1 to 3.

## Revendications

1. Mélange de polyéthylènes peu odorant, contenant
(a) 30 à 90 % en poids d'un copolymère d'éthylène de masse moléculaire élevée ayant un indice d'écoulement à l'état fondu MFR 190/21,6 1,5 g/10 min, une masse volumique 0,950 g/cm³, une moyenne en poids de la masse moléculaire Mw 300 000 g/mol, une amplitude de distribution de masse moléculaire M_{w}/Mₙ de 1 - 10, pouvant être obtenu par polymérisation en présence d'un catalyseur de Ziegler
et
(b) 10 - 70 % en poids d'un homopolymère ou copolymère d'éthylène de faible masse moléculaire ayant un indice d'écoulement à l'état fondu MFR 190/2,16 de 20 - 100 g/10 min, une masse volumique 0,95 g/cm³, une moyenne en poids de la masse moléculaire M_{w} de 8000 - 80000 g/mol, une amplitude de distribution de masse moléculaire M_{w}/Mₙ de 2,5 - 12, pouvant être obtenu par polymérisation en présence d'un catalyseur au chromocène sur un support d'oxyde métallique,
tandis que la teneur en Al du composant de masse moléculaire élevée vaut de 5 à 60 ppm, la teneur en Al du composant de faible masse moléculaire vaut de 0 à 5 ppm, et la teneur en Al du mélange vaut de 1 à 55 ppm.

2. Mélange de polyéthylènes peu odorant selon la revendication 1, **caractérisé par le fait que** le copolymère d'éthylène de masse moléculaire élevée possède une proportion de comonomère de 0,2 - 4,0 % en moles et l'homo- ou copolymère d'éthylène de faible masse moléculaire possède une proportion de comonomère de 0 - 1 % en moles à chaque fois par rapport à la quantité totale de tous les monomères mis en oeuvre.

3. Mélange de polyéthylènes peu odorant selon la revendication 2, **caractérisé par le fait que** le comonomère est au moins un comonomère choisi dans le groupe des propène, 1-butène, 1-pentène, 1-hexène, 1-octène, 4-méthylpentène.

4. Mélange de polyéthylènes peu odorant selon les revendications 1 à 3, **caractérisé par le fait qu'**on prépare le copolymère d'éthylène de masse moléculaire élevée (a) par polymérisation avec un catalyseur de Ziegler en suspension ou en phase gazeuse.

5. Mélange de polyéthylènes peu odorant selon la revendication 1, **caractérisé par le fait qu'**on prépare l'homopolymère ou copolymère d'éthylène de faible masse moléculaire (b) par polymérisation avec un catalyseur au chromocène ou un catalyseur au chromocène substitué sur un support d'oxyde métallique, en suspension ou en phase gazeuse.

6. Mélange de polyéthylènes peu odorant selon la revendication 5, **caractérisé par le fait qu'**il s'agit pour l'oxyde métallique d'un gel de silice.

7. Procédé pour la préparation d'un mélange de polyéthylènes peu odorant selon les revendications 1 à 3, **caractérisé par le fait qu'**on mélange entre eux et on homogénéise un copolymère d'éthylène de masse moléculaire élevée (a), préparé par polymérisation avec un catalyseur de Ziegler, en suspension ou un phase gazeuse et un homopolymère ou copolymère d'éthylène de faible masse moléculaire (b), préparé par polymérisation avec un catalyseur au chromocène ou un catalyseur au chromocène substitué sur un support d'oxyde métallique, en suspension ou en phase gazeuse.

8. Utilisation des mélanges de polyéthylènes peu odorants selon les revendications 1 à 3 pour la préparation de feuilles, de pièces moulées, en particulier de corps creux et de tubes de pression.

9. Feuilles et pièces moulées, en particulier corps creux et tubes de pression, préparés à partir de polyéthylène peu odorant selon les revendications 1 à 3.
